# EUROPÄISCHE PATENTSCHRIFT

(11) **EP 1 483 057 B1**
(45) Veröffentlichungstag und Bekanntmachung des Hinweises auf die Patenterteilung: **02.07.2008**
(21) Anmeldenummer: 03708078.5
(22) Anmeldetag: 01.02.2003
(51) Int. Cl.: B05C 3/10

(54) **ANLAGE ZUM BEHANDELN, INSBESONDERE ZUM KATAPHORETISCHEN TAUCHLACKIEREN, VON GEGENST NDEN, INSBESONDERE VON FAHRZEUGKAROSSERIEN**
PLANT FOR THE TREATMENT, IN PARTICULAR THE CATAPHORETIC DIP COATING OF OBJECTS, IN PARTICULAR OF VEHICLE CHASSIS
INSTALLATION DE TRAITEMENT, EN PARTICULIER DE PEINTURE PAR IMMERSION CATAPHORETIQUE, D'OBJETS, NOTAMMENT DE CARROSSERIES DE VEHICULES

(30) Priorität: 13.03.2002 DE 10210941
(43) Veröffentlichungstag der Anmeldung: 08.12.2004
(73) Patentinhaber: EISENMANN Anlagenbau GmbH & Co. KG, 71032 Böblingen (DE)
(72) Erfinder: EHRENLEITNER, Franz, 70439 Stuttgart (DE)
(74) Vertreter: Ostertag, Ulrich
(86) Internationale Anmeldenummer: PCT/EP2003/001009
(87) Internationale Veröffentlichungsnummer: WO 2003/076080

(56) Entgegenhaltungen:
- DE-U- 20 105 676

## Beschreibung

Die Erfindung betrifft eine Anlage zum Behandeln von Gegenständen mit
a) mehreren Behandlungsbehältern, in denen die Gegenstände jeweils mit einer Behandlungsflüssigkeit beaufschlagbar sind;
b) mindestens einem Transportwagen, welcher die Gegenstände durch die Anlage führt, diese dabei in die Behandlungsbehälter ein- und ausbringt und seinerseits umfasst:
   ba) ein entlang des Bewegungsweges der Gegenstände verfahrbares Fahrwerk;
   bb) mindestens einen an dem Fahrwerk angelenkten Schwenkarm;
   bc) eine an dem Schwenkarm angelenkte Halterung für mindestens einen Gegenstand;
   bd) unabhängig voneinander betätigbare Antriebe für die Translationsbewegung, die Schwenkung des mindestens einen Schwenkarms und der Halterung;
   be) eine Gewichts-Ausgleichseinrichtung, mit welcher die Kraft, die zum Verschwenken des mindestens einem Schwenkarms erforderlich ist, reduziert werden kann, wobei
   bf) die Gewichts-Ausgleichseinrichtung mindestens einen Energiespeicher umfasst, in dem die beim Absenken des Gegenstandes frei werdende Energie zwischenspeicherbar und aus dem die zwischengespeicherte Energie zur Unterstützung der Aufwärtsbewegung des Gegenstandes wieder abrufbar ist.

In Lackieranlagen für Fahrzeugkarosserien, jedoch auch für andere Gegenstände, gibt es eine Vielzahl von Behandlungsbehältern, in denen die Gegenstände mit einer Behandlungsflüssigkeit beaufschlagt werden. Unter "Beaufschlagung" wird hier sowohl das Schwallen und das Bespritzen als auch das Eintauchen der Gegenstände mit der bzw. in die Behandlungsflüssigkeit verstanden. "Schwallen" ist ein Vorgang, bei dem verhältnismäßig große Mengen Behandlungsflüssigkeit auf die Gegenstände pro Zeiteinheit aufgebracht werden. Ein solches Schwallen wird beispielsweise zur Grobreinigung von Fahrzeugkarosserien in der sog. Vorbehandlungszone eingesetzt. Unter Bespritzen wird die Erzeugung eines sehr feinen Sprühnebels verstanden, der in alle Winkel, Ritzen und sonstigen unzugänglichen Stellen der behandelnden Gegenstände eindringt. Derartige Spritzvorgänge finden beispielsweise sowohl zur Reinigung als auch zur Phosphatierung, Passivierung oder Aktivierung von Oberflächen sowie zum Abspülen einer Behandlungsflüssigkeit statt. Beim Eintauchen werden die Gegenstände, wie der Name besagt, unter den Flüssigkeitsspiegel eines Bades der Behandlungsflüssigkeit gebracht. Eintauchvorgänge finden sich beispielsweise ebenfalls beim Reinigen und den sonstigen in der Vorbehandlungszone stattfindenden Prozessen, aber auch im Lackiervorgang selbst.

Von besonderer Bedeutung bei derartigen Anlagen ist die Art und Weise, wie die Gegenstände durch die Anlage hindurchgeführt und in die einzelnen Behandlungsbehälter ein- bzw. aus diesen ausgebracht werden. Die dabei eingesetzte Kinematik der Gegenstände sollte zum ersten sicherstellen, daß die Gegenstände in optimaler Weise von der Behandlungsflüssigkeit erreicht, aber auch wieder vollständig von der Behandlungsflüssigkeit befreit werden können. Zum zweiten sollte die Kinematik der Gegenstände so sein, daß die Länge der einzelnen Behandlungsbehälter und damit auch die Länge der Gesamtanlage möglichst kurz bleibt.

In diesem Zusammenhang hat sich besonders eine Anlage der eingangs genannten Art bewährt, wie sie in der DE-U-201 05 676 beschrieben ist. Die Bewegungsfreiheitsgrade, welche der in der bekannten Anlage eingesetzte Transportwagen für die Gegenstände zur Verfügung stellt, erfüllt die oben genannten Anforderungen optimal. Um die Kraft, die zum Verschwenken der Schwenkarme erforderlich ist, möglichst gering zu halten, verwendet die bekannte Anlage Gegengewichte. Derartige Gegengewichte können jedoch nicht verhindern, daß die beim Absinken der Gegenstände frei werdende Energie verloren geht und beim Anheben der Gegenstände wieder neu aufgebracht werden muß. Wenn unterschiedliche Gegenstände mit unterschiedlichem Gewicht in der Anlage behandelt werden sollen, ist eine optimale Anpassung des Gegengewichtes ohnehin schwierig oder gar unmöglich.

Daher sieht die o. g. Druckschrift auch bereits einen mit dem Schwenkarm zusammenarbeitenden Energiespeicher vor, welcher nicht nur für eine Gegenkraft sorgt, welche das auf den Schwenkarm wirkende Gewicht des Gegenstandes wenigstens teilweise ausbalanciert, sondern auch den Energieverbrauch reduziert, indem es die beim Absenken des Gegenstandes aufgrund nicht ausbalancierter Gewichtskräfte frei werdende Energie für den Anhebevorgang des Gegenstandes nutzt.

Aufgabe der vorliegenden Erfindung ist es, eine Anlage der eingangs genannten Art so auszugestalten, daß der Energiebedarf für die Verschwenkung des mindestens einen Schwenkarmes minimiert ist.

Diese Aufgabe wird erfindungsgemäß dadurch gelöst, daß
c) die Energiezwischenspeicherung im Energiespeicher durch elastische Verformung eines Mediums erfolgt,
d) der Energiespeicher mindestens einen gasgefüllten, insbesondere luftgefüllten Balg umfasst,
e) die Federkennlinie des Balgs individuell an das Gewicht des jeweils von den Transportwagen getragenen Gegenstandes anpassbar ist, indem der Innendruck des Balgs einstellbar ist.

Gasgefüllte, insbesondere luftgefüllte Balge sind sehr viel besser als Federn geeignet, große Gewichte, wie sie insbesondere bei der Behandlung von Fahrzeugkarosserien auftreten, aufzunehmen und gleichwohl großen Winkelbewegungen der Schwenkarme zu folgen.

Dadurch, daß der Innendruck des Balges einstellbar ist, kann die Federkennlinie des Balges individuell an das Gewicht des jeweils von Transportwagen getragenen Gegenstandes angepasst werden.

Wo die zu behandelnden Gegenstände nicht allzu schwer und die vom Schwenkarm zu durchlaufenden Winkel nicht allzu groß sind, kann selbstverständlich als Energiespeicher auch eine Feder zusätzlich eingesetzt werden.

Eine solche Feder kann bevorzugt beispielsweise eine Gasfeder sein.

In diesem Falle emfiehlt sich zur Vermeidung von Schwingungen, wenn der Feder eine geeignete Dämpfungsvorrichtung zugeordnet ist.

Bei einer besonders bevorzugten Ausführungsform der Erfindung liegt in dem Kraftfluss zwischen dem mindestens einen Schwenkarm und dem Energiespeicher ein aus mehreren, gelenkig miteinander verbundenen Gliedern bestehendes Gestänge. Dieses Gestänge kann durch die Geometrie und Zahl der einzelnen Glieder so ausgelegt werden, daß die im allgemeinen vorliegende Abhängigkeit der Federkraft des Energiespeichers von dessen Federweg im wesentlichen beseitigt wird, die Verschwenkung des mindestens einen Schwenkarmes also auf dessen gesamtem Bewegungsweg mit im wesentlichen gleicher Kraft erfolgen kann. Durch ein derartiges Gestänge kann auch in erheblichem Maße kompensiert werden, daß das Drehmoment, welches von dem Gewicht des Gegenstandes auf die Schwenkarme ausgeübt wird, eine Funktion des Schwenkwinkels, insbesondere eine Sinusfunktion, ist.

Für diesen Zweck eignet sich besonders eine Ausgestaltung der Erfindung, bei welcher das Gestänge drei Glieder umfasst, von denen das Glied, welches den Energiespeicher beaufschlagt, als wippenartiger, zweiarmiger Hebel ausgebildet ist.

Wenn die Glieder des Gestänges jeweils aus zwei Laschen bestehen, welche durch die Gelenkzapfen, um welche die Glieder verschwenkbar sind, miteinander verbunden sind, ist das Gewicht des Gestänges vergleichsweise gering, ohne dadurch Einbußen an mechanischer Stabilität zu erleiden.

Das Gestänge wird bei einem bevorzugten Ausführungsbeispiel auch zur Einleitung der die Schwenkbewegung des Schwenkarms benötigten Kraft genutzt. Es zeichnet sich dadurch aus, daß der Antrieb für den mindestens einen Schwenkarm mindestens einen Motor umfaßt, der eine Gewindespindel antreibt, die ihrerseits mit einer an einem Glied des Gestänges verschwenkbar befestigten Gewindemuffe zusammenwirkt.

Anlagen diser Art eignen sich besonders auch zum kataphoretischen Tauchlackieren von Gegenständen, welche insbesondere Fahrzeugkarosserien sein können.

Ein Ausführungsbeispiel der Erfindung wird nachfolgend anhand der Zeichnung näher erläutert; es zeigen
- Figur 1:: perspektivisch die zum Verständnis der vorliegenden Erfindung erforderlichen Komponenten eines Transportwagens;
- Figur 2:: den Transportwagen von Figur 1, gesehen in Richtung des dortigen Pfeiles II;

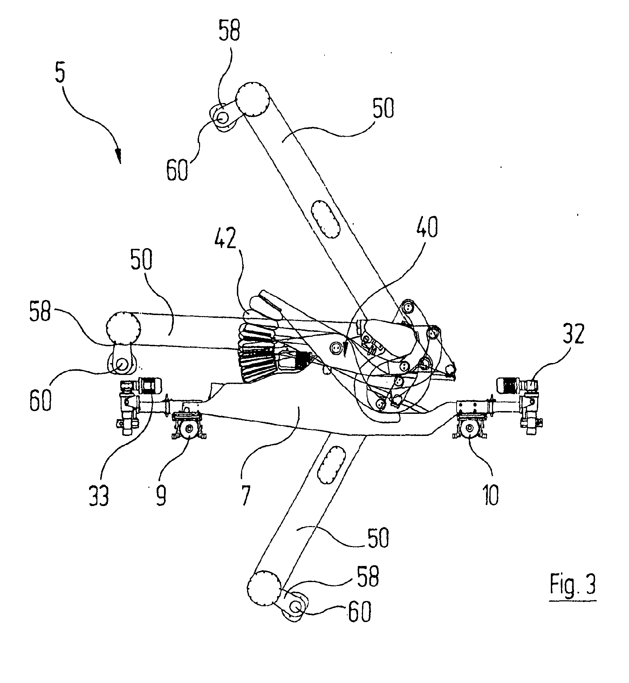

- Figur 3:: den Transportwagen der Figuren 1 und 2, von der Seite gesehen bei unterschiedlichen Stellungen des Schwenkarmes, der Teil des Transport-wagens ist;
- Figur 4:: die Draufsicht auf den Transportwagen der Figuren 1 und 2;
- Figuren 5 bis 7:: Schnitte gemäß Linie D-D von Figur 4 in unterschiedlichen Stellungen des Schwenkarms.

Der in den Figuren insgesamt mit dem Bezugszeichen 5 gekennzeichnete Transportwagen ist in seinen grundsätzlichen Funktionen und in seinem grundsätzlichen Aufbau aus der DE-U-201 05 676 bekannt. Um die Figuren und die zugehörige Beschreibung nicht zu überfrachten, sind in der Zeichnung verschiedene Komponenten des Transportwagens 5 weggelassen. Bezüglich dieser Komponenten wird ergänzend auf die DE-U-201 05 676 verwiesen.

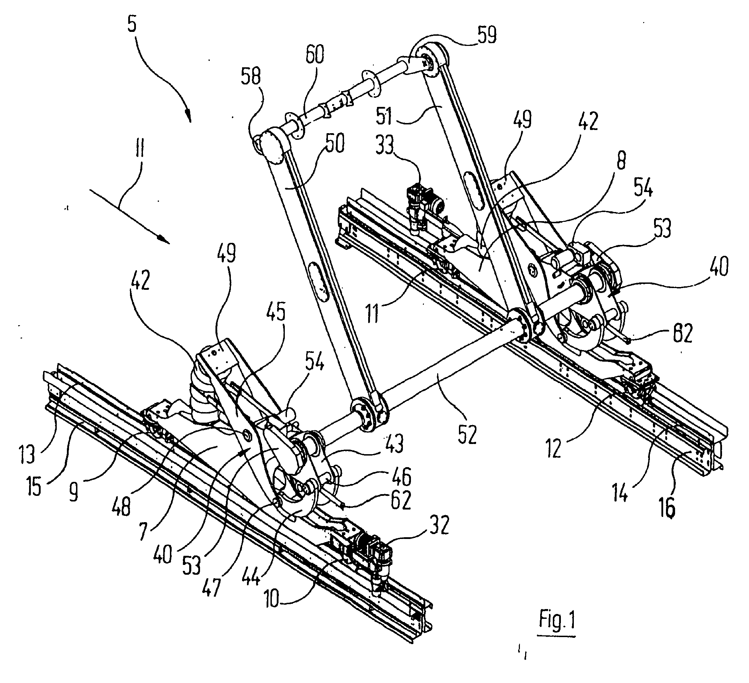

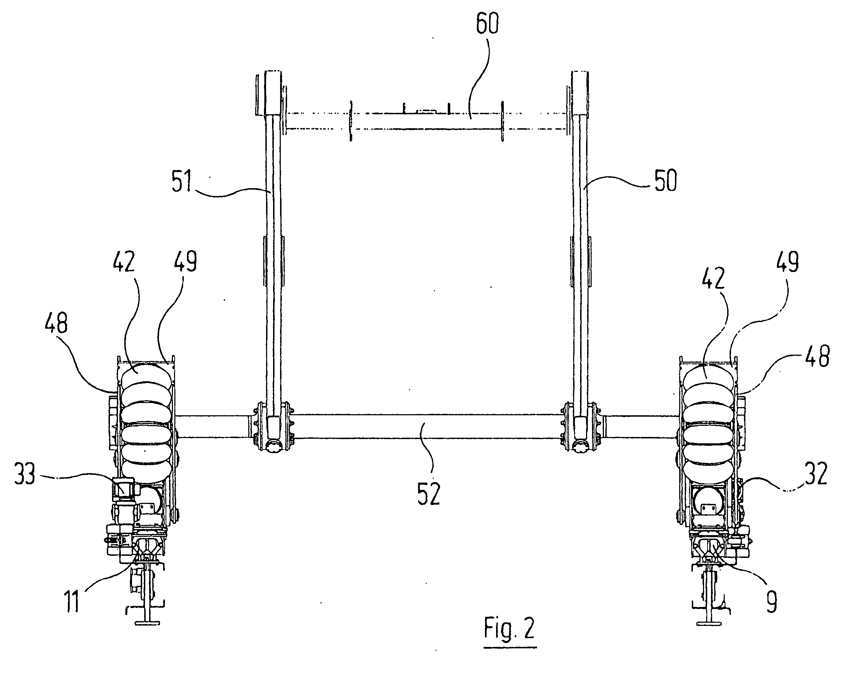

Wie insbesondere den Figuren 1 und 2 zu entnehmen ist, besitzt jeder Transportwagen 5 zwei Längstraversen 7, 8, an deren Unterseite jeweils zwei Doppelräder 9, 10 bzw. 11, 12 um eine horizontale Achse drehbar gelagert sind. Zusätzlich sind die Räder 9 bis 12 jeweils mit Hilfe eines im einzelnen nicht dargestellten Drehschemels um eine vertikale Achse verdrehbar, so daß die Ausrichtung der Doppelräder 9 bis 12 gegenüber den jeweiligen Längstraversen 7, 8 verändert werden kann.

Die Doppelräder 9, 10 rollen auf einer ersten Lauffläche 13 und die Doppelräder 11, 12 auf einer hierzu parallelen zweiten Lauffläche 14 ab. Die Laufflächen 13, 14 sind ihrerseits auf jeweils einem I-Profilträger 15, 16 montiert, der von einem nicht dargestellten Stahlbau getragen wird.

Die Doppelräder 9 bis 12 sind in geeigneter Weise, wie dies im einzelnen der oben genannten DE-U-201 05 676 zu entnehmen ist, so geführt, daß sie dem Verlauf der Laufflächen 13, 14 folgen.

Die beiden Längstraversen 7, 8 sind miteinander durch eine Welle 52 verbunden, die senkrecht zur Förderrichtung verläuft und an den beiden Längsträgern 7, 8 gelagert ist. Auf der Welle 52 sind zwei parallele Schwenkarme 50, 51 drehschlüssig angebracht, an deren von der Welle 52 entfernten Enden jeweils eine Lasche 58, 59 verschwenkbar gelagert ist. Als Antriebsmittel für die Verschwenkung der beiden Laschen 58, 59 dienen zwei Getriebemotoren 54, die auf den jeweiligen Längstraversen 7, 8 etwa in deren mittlerem Bereich befestigt sind. Die Ausgangswellen der Getriebemotoren 54 sind über jeweils ein Riemengetriebe 53 mit einer in der Zeichnung nicht sichtbaren Innenwelle verbunden, die sich durch die hierzu hohl ausgebildete Welle 52 koaxial hindurcherstreckt. Von dieser Innenwelle verlaufen durch die beiden hohlen Schwenkarme 50, 51 hindurch zwei ebenfalls nicht sichtbare Riemengetriebe, welche die Innenwelle mit den Schwenklagern für die Laschen 58, 59 verbinden.

Die von den Schwenkarmen 50, 51 entfernten Enden der Laschen 58, 59 sind durch eine senkrecht zur Bewegungsrichtung verlaufende Quertraverse 60 miteinander verbunden, die ihrerseits starr mit dem mittleren Bereich einer in der Zeichnung nicht dargestellten Tragplattform für eine Fahrzeugkarosserie in Verbindung steht. Die Erstreckungsrichtung der beiden Laschen 58, 59 verläuft dabei senkrecht zur Ebene der Tragplattform.

Die gegenüberliegenden Endbereiche der Welle 52 sind jeweils in einer nachfolgend im einzelnen geschilderten Weise über ein Gestänge 40 mit einem als Energiespeicher dienenden, luft- oder gasgefüllten Balg 42 verbunden.

Die Gestänge 40 sind folgendermaßen aufgebaut: Sie umfassen jeweils drei Glieder 43, 44, 45, die gelenkig über Gelenkzapfen 46, 47 miteinander verbunden sind. Alle drei Glieder 43, 44, 45 des Gestänges 40 bestehen jeweils aus zwei parallelen, ebenen, vertikal ausgerichteten Laschen, die durch die entsprechenden Gelenkzapfen 46, 47 auseinander gehalten und gleichzeitig miteinander verbunden sind. Die Laschen des ersten, ungefähr dreieckigen Gliedes 43 sind im Bereich eines Ecks drehschlüssig mit der Welle 52 verbunden. Das mittlere, bogenförmige Glied 44 ist an beiden Enden mit den beiden Gelenkzapfen 46, 47 verbunden. Das dritte Glied 45 ist nach Art eines Doppelhebels ausgebildet, der in seinem mittleren Bereich mit Hilfe eines weiteren Gelenkzapfens 48 an einem nach oben ragenden Bereich der entsprechenden Längstraverse 7, 8 verschwenkbar gelagert ist. Die von dem mittleren Glied 44 abgewandten Enden der Laschen des dritten Gliedes 45 sind durch eine Druckplatte 49 miteinander verbunden, an welcher die obere Stirnfläche des Balges 42 anliegt und befestigt ist. Die untere Stirnfläche des Balges 42 ist auf einer entsprechenden, etwas schräg gestellten Fläche der Längstraverse 7 aufgesetzt und befestigt.

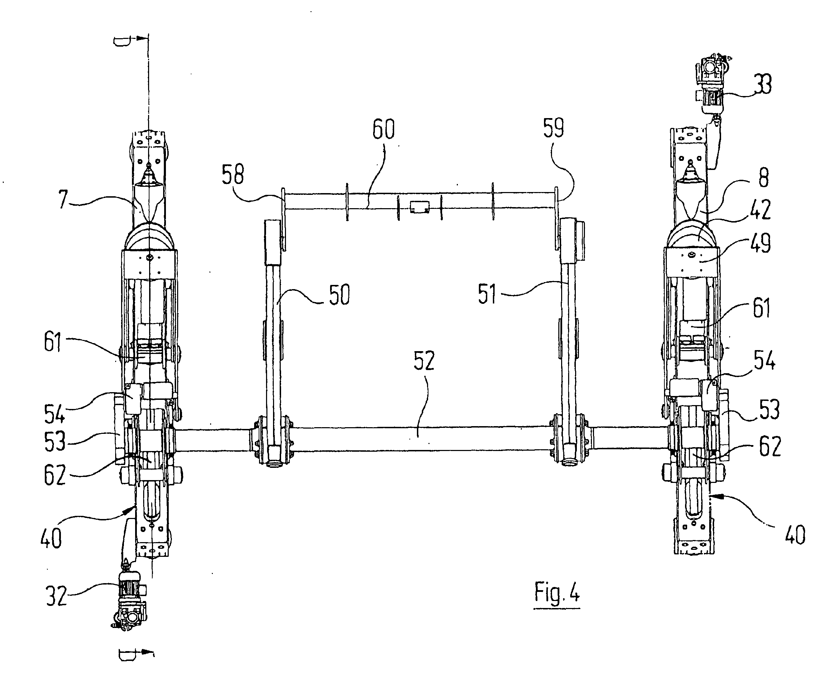

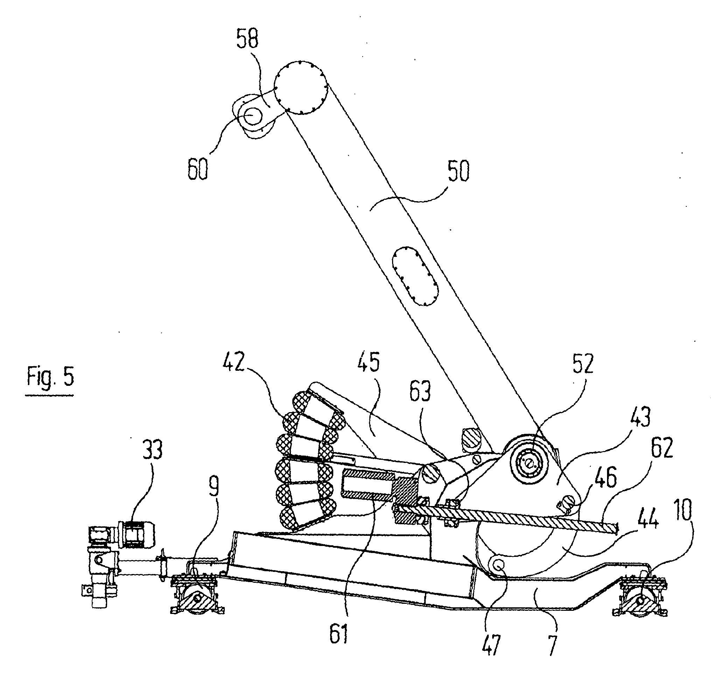

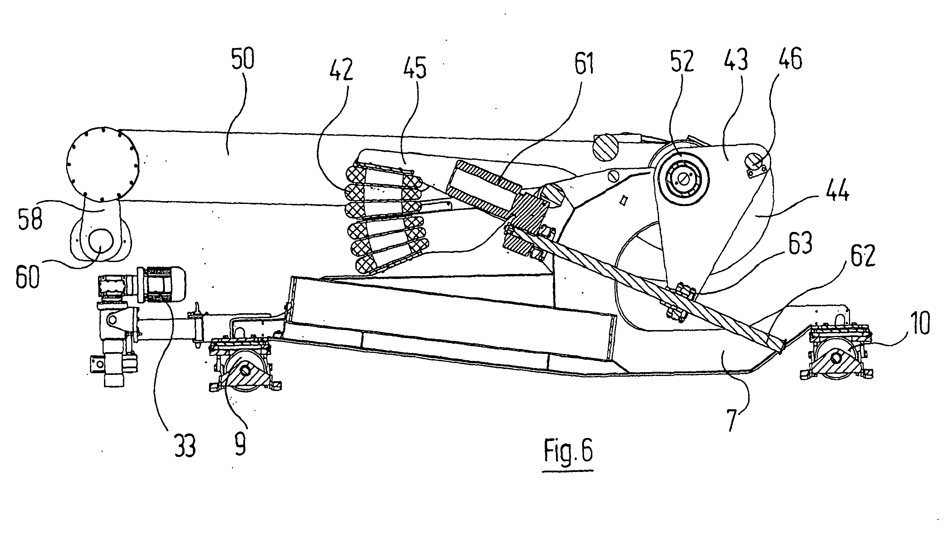

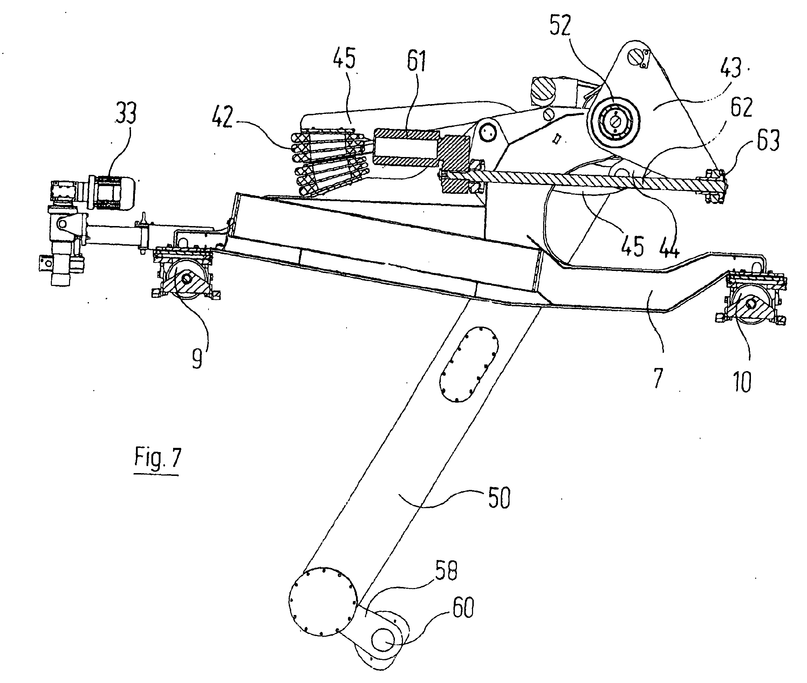

Wie insbesondere die Figuren 4 bis 7 zeigen, ist an den jeweils nach oben ragenden, die Welle 52 lagernden Bereichen der Längstraversen 7, 8 jeweils ein Getriebemotor 61 verschwenkbar befestigt, der eine Gewindespindel 62 in beiden Richtungen in Drehung versetzen kann. Die Gewindespindel 62 durchsetzt eine drehbar an einem Eck des dreieckigen Glieds 43 des Gestänges 40 befestigte Gewindemuffe 63. Werden die Getriebemotoren 61 ausgehend von dem in Figur 5 dargestellten Zustand in einem Drehsinn in Gang gesetzt, so schrauben sich die Gewindemuffen 63 auf den Gewindespindeln 62 in Figur 5 nach rechts, wodurch das Glied 43 des Gestänges 40 samt der Welle 52 gegen den Uhrzeigersinn zunächst in die in Figur 6 und sodann in die in Figur 7 dargestellte Position gebracht wird. Dabei senken sich die die Laschen 58, 59 und damit die die Fahrzeugkarosserie tragenden Enden der Schwenkarme 50, 51 ab. Das vom Gewicht der Fahrzeugkarosserie und der diese tragenden Komponenten auf die Welle 52 ausgeübte Drehmoment wird im wesentlichen über die Glieder 44 und 45 des Gestänges 40 auf die Bälge 42 übertragen, die elastisch komprimiert werden und so einen Großteil der Energie, die beim Absenken der Karosserie frei wird, als elastische Verformung zwischenspeichern.

Sollen die Schwenkarme 50, 51 in der Sicht der Figuren 5 bis 7 im Uhrzeigersinn wieder zurückgeschwenkt werden, so werden die Gewindespindeln 62 in entgegengesetztem Drehsinn wie zuvor verdreht. Dabei werden die Gewindemuffen 63 auf den Geweindespindeln 62 in Richtung auf die Getriebemotoren 61 verschraubt, was eine entsprechende Verschwenkung der Glieder 43 und der Welle 52 zur Folge hat. Diese Schwenkbewegung wird durch die Kraft der sich entspannenden Bälge 42 unterstützt, die über die Glieder 44 und 45 der Gestänge 40 übertragen wird. Die in den Bälgen 42 zwischengespeicherte Energie wird dabei in Hubarbeit umgesetzt.

Mit Hilfe der beschriebenen Konstruktion läßt sich die Energie, die zum Verschwenken der Schwenkarme 50, 51 und damit der Fahrzeugkarosserie erforderlich ist, erheblich reduzieren.

Die Federkennlinie der Bälge 42 wird dabei durch Einstellung des in ihnen herrschenden Druckes an das Gewicht der Fahrzeugkarosserie angepasst, die von dem Transportwagen 5 getragen wird.

Das Gestänge 40 mit seinen drei Gliedern 43, 44, 45 ist so ausgelegt, daß es weitgehend zweierlei Einflüsse kompensiert: zum einen die im allgemeinen nicht-lineare Federcharakteristik der Bälge 42 und zum anderen die Abhängigkeit des durch das Gewicht der Fahrzeugkarosserie und der sie tragenden Teile ausgeübten Drehmomentes von dem Schwenkwinkel, die einer Sinusfunktion entspricht. Auf diese Weise müssen die Getriebemotoren 61, welche die Gewindespindeln 62 verdrehen, nur ein außerordentlich kleines und nur sehr wenig von dem Schwenkwinkel der Schwenkarme 50, 51 abhängiges Drehmoment auf die Gewindespindeln 62 aufbringen.

Die Doppelräder 9 bis 12 des Transportwagens 5 sind selbst nicht angetrieben. Der Vorwärtstrieb der Transportwagen 5 erfolgt vielmehr über gesondere Pressrollenantriebe, zu denen die in der Zeichnung dargestellten elektrischen Antriebsmotoren 32, 33 gehören, die ebenfalls auf den Längstraversen 7, 8 montiert sind. Wegen Einzelheiten dieses Pressrollenantriebes wird auf die DE-U 201 05 676 verwiesen.

Jeder Transportwagen 5 umfasst seine eigene Wagensteuerung, unter deren Regime er sowohl seine Translationsbewegung entlang der Laufflächen 13, 14 als auch die Schwenkbewegungen der schwenkarme 50, 51 und der Tragplattform ausführt.

Die Gesamtbewegung der Tragplattform und der darauf gehaltenen Fahrzeugkarosserie ergibt sich aus einer Überlagerung der linearen Translationsbewegung des Transportwagens 5, einer ersten Schwenkbewegung, welche die Schwenkarme 50, 51 gegenüber den Längstraversen 7, ausführen und die mit einem Anheben bzw. Absenken der Fahrzeugkarosserie verbunden ist, und einer zweiten Schwenkbewegung, welche die auf der Tragplattform befindliche Fahrzeugkarosserie gegenüber den Schwenkarmen 50, 51 ausführt. All diese Bewegungsarten können vollständig unabhängig voneinander durchgeführt werden, was zu praktisch beliebigen Hewegungskinematiken der Fahrzeugkarosserie führt.

## Patentansprüche

1. Anlage zum Behandeln von Gegenständen mit
a) mehreren Behandlungsbehältern, in denen die Gegenstände jeweils mit einer Behandlungsflüssigkeit beaufschlagbar sind;
b) mindestens einem Transportwagen (5), welcher die Gegenstände durch die Anlage führt, diese dabei in die Behandlungsbehälter ein- und ausbringt und seinerseits umfasst:
ba) ein entlang des Bewegungsweges der Gegenstände verfahrbares Fahrwerk (9 bis 12);
bb) mindestens einen an dem Fahrwerk (9 bis 12) angelenkten Schwenkarm (50, 51);
bc) eine an dem Schwenkarm (50, 51) angelenkte Halterung (58 bis 60) für mindestens einen Gegenstand;
bd) unabhängig voneinander betätigbare Antriebe (32, 33; 54; 61) für die Translationsbewegung, die Schwenkung des mindestens einen Schwenkarmes (50, 51) und der Halterung (58 bis 60);
be) eine Gewichts-Ausgleichseinrichtung (42), mit welcher die Kraft, die zum Verschwenken des mindestens einen Schwenkarmes (50, 51) erforderlich ist, reduziert werden kann, wobei
bf) die Gewichts-Ausgleichseinrichtung (42) mindestens einen Energiespeicher umfasst, in dem die beim Absenken des Gegenstandes frei werdende Energie zwischenspeicherbar und aus dem die zwischengespeicherte Energie zur Unterstützung der Aufwärtsbewegung des Gegenstandes wieder abrufbar ist,
**dadurch gekennzeichnet, daß**
c) die Energiezwischenspeicherung im Energiespeicher (42) durch elastische Verformung eines Mediums erfolgt,
d) der Energiespeicher mindestens einen gasgefüllten, insbesondere luftgefüllten Balg (42) umfasst,
e) die Federkennlinie des Balgs (42) individuell an das Gewicht des jeweils von Transportwagen (5) getragenen Gegenstandes anpassbar ist, indem der Innendruck des Balgs (42) einstellbar ist.

2. Anlage nach Anspruch 1, **dadurch gekennzeichnet, daß** der Energiespeicher eine Feder umfasst.

3. Anlage nach Anspruch 2, **dadurch gekennzeichnet, daß** die Feder eine Gasfeder ist.

4. Anlage nach Anspruch 2 oder 3, **gekennzeichnet durch** eine der Feder zugeordnete Dämpfungsvorrichtung.

5. Anlage nach einem der vorhergehenden Ansprüche, **dadurch gekennzeichnet, daß** in dem Kraftfluß zwischen dem mindestens einen Schwenkarm (50, 51) und dem Energiespeicher (42) ein aus mehreren, gelenkig miteinander verbundenen Gliedern (43, 44, 45) bestehendes Gestänge (40) liegt.

6. Anlage nach Anspruch 5, **dadurch gekennzeichnet, daß** das Gestänge (40) drei Glieder (43, 44, 45) umfasst, von denen das Glied (45), welches den Energiespeicher (42) beaufschlagt, als wippenartiger, zweiarmiger Hebel ausgebildet ist.

7. Anlage nach Anspruch 5 oder 6, **dadurch gekennzeichnet, daß** die Glieder (43, 44, 45) des Gestänges (40) jeweils zwei Laschen umfassen, welche durch die Gelenkzapfen (46, 47, 48), um welche die Glieder (43, 44, 45) verschwenkbar sind, miteinander verbunden sind.

8. Anlage nach einem der Ansprüche 5 bis 7, **dadurch gekennzeichnet, daß** der Antrieb für den mindestens einen Schwenkarm (50, 51) mindestens einen Motor (61) umfaßt, der eine Gewindespindel (61) antreibt, die ihrerseits mit einer an einem Glied (43) des Gestänges (40) verschwenkbar befestigten Gewindemuffe (63) zusammenwirkt.

9. Anlage nach eienm der vorhergehenden Ansprüche, **dadurch gekennzeichnet, daß** sie zum kataphoretischen Tauchlackieren dient.

10. Anlage nach eienm der vorhergehenden Ansprüche, **dadurch gekennzeichnet, daß** die Gegenstände Fahrzeugkarosserien sind.

## Claims

1. System for treating articles, comprising
a) a plurality of treatment containers, in which the articles are acted upon in each case by a treatment liquid;
b) at least one feed carriage (5) which conveys the articles through the system and in the process introduces them into and removes them from the treatment containers and which in turn comprises:
ba) a running gear (9 to 12) movable along the path of motion of the articles;
bb) at least one swivel arm (50, 51) coupled to the running gear (9 to 12);
bc) a holding device (58 to 60) coupled to the swivel arm (50, 51) for at least one article;
bd) mutually independently actuable drives (32, 33; 54; 61) for the translational movement, the swivelling of the at least one swivel arm (50, 51) and of the holding device (58 to 60);
be) a counterbalancing device (42), by means of which the energy needed to swivel the at least one swivel arm (50, 51) may be reduced;
wherein
bf) the counterbalancing device (42) comprises at least one energy storage, in which the energy released during lowering of the article is temporarily storable and from which the temporarily stored energy is retrievable in order to assist the upward movement of the article,
**characterized in that**
c) the temporarily storing of energy in the energy storage takes place by virtue of elastic deformation of a medium,
d) the energy storage comprises at least one gasfilled, in particular air-filled bellows device (42),
e) the spring characteristic of the bellows device is individually adaptable to the weight of the respective article being carried by the feed carriage by the internal pressure of the bellows device (42) being adjustable.

2. System according to claim 1, **characterized in that** the energy storage comprises a spring.

3. System according to claim 2, **characterized in that** the spring is a pneumatic spring.

4. System according to claim 2 or 3, **characterized by** a damping apparatus associated with the spring.

5. System according to one of the preceding claims, **characterized** that a linkage (40) comprising a plurality of hinge-connected elements (43, 44, 45) lies in the energy flow between the at least one swivel arm (50, 51) and the energy storage (42).

6. System according to claim 5, **characterized in that** the linkage (40) comprises three elements (43, 44, 45), of which the element (45) that acts upon the energy storage (42) is designed as a rocker-like, two-armed lever.

7. System according to claim 5 or 6, **characterized in that** the elements (43, 44, 45) of the linkage (40) comprise in each case two links, which are connected to one another by the link pins (46, 47, 48), about which the elements (43, 44, 45) are pivotable.

8. System according to one of claims 5 to 7, **characterized in that** the drive for the at least one swivel arm (50, 51) comprises at least one motor (61), which drives a threaded spindle (61), which in turn interacts with a threaded coupling (63) pivotally fastened to an element (43) of the linkage (40).

9. System according to one of the preceding claims, **characterized in that** it is for cataphoretic dipcoating.

10. System according to one of the preceding claims, **characterized in that** the articles are vehicle bodies.

## Revendications

1. Installation pour le traitement d'objets avec
a) plusieurs récipients de traitement, dans lesquels les objets peuvent être respectivement sollicités avec un liquide de traitement ;
b) au moins un chariot de transport (5), qui dirige les objets à travers l'installation et ce faisant les introduit dans les récipients de traitement et les en retire, et qui comprend lui-même :
ba) un dispositif de roulement (9 à 12) pouvant être déplacé le long de la voie de déplacement des objets ;
bb) au moins un bras pivotant (50, 51) articulé sur le dispositif de roulement (9 à 12);
bc) un support (58 à 60) pour au moins un objet, support qui est articulé sur le bras pivotant (50, 51) ;
bd) des entraînements (32, 33 ; 54 ; 61) pouvant être actionnés indépendamment entre eux pour le mouvement de translation et le pivotement du bras pivotant au moins unique (50, 51) et du support (58 à 60);
be) un dispositif (42) d'équilibrage de poids, qui permet de réduire la force nécessaire pour faire pivoter le bras pivotant au moins unique (50, 51),
bf) sachant que le dispositif (42) d'équilibrage de poids comprend au moins un accumulateur d'énergie, dans lequel l'énergie libérée lors de l'abaissement de l'objet peut être temporairement accumulée, et depuis lequel l'énergie temporairement accumulée peut être rappelée afin d'assister le mouvement ascendant de l'objet,
**caractérisée en ce que**
c) l'accumulation temporaire d'énergie dans l'accumulateur d'énergie (42) s'effectue par déformation élastique d'un fluide,
d) l'accumulateur d'énergie comprend au moins un soufflet (42) rempli de gaz, notamment rempli d'air,
e) la courbe caractéristique de ressort du soufflet (42) peut être individuellement adaptée au poids de l'objet respectivement porté par le chariot de transport (5), par le fait que la pression intérieure du soufflet (42) est réglable.

2. Installation selon la revendication 1, **caractérisée en ce que** l'accumulateur d'énergie comprend un ressort.

3. Installation selon la revendication 2, **caractérisée en ce que** le ressort est un ressort à gaz.

4. Installation selon la revendication 2 ou 3, **caractérisée par** un dispositif d'amortissement associé au ressort.

5. Installation selon l'une des revendications précédentes, **caractérisée en ce qu'**une tringlerie (40) constituée de plusieurs éléments (43, 44, 45) reliés entre eux de manière articulée se trouve dans le chemin de force entre le bras pivotant au moins unique (50, 51) et l'accumulateur d'énergie (42).

6. Installation selon la revendication 5, **caractérisée en ce que** la tringlerie (40) comprend trois éléments (43, 44, 45), parmi lesquels l'élément (45) qui sollicite l'accumulateur d'énergie (42) est réalisé sous la forme d'un levier à deux bras du genre bascule.

7. Installation selon la revendication 5 ou 6, **caractérisée en ce que** les éléments (43, 44, 45) de la tringlerie (40) comprennent chacun deux attaches qui sont reliées entre elles par les pivots (46, 47, 48) autour desquels peuvent pivoter les éléments (43, 44, 45).

8. Installation selon l'une des revendications 5 à 7, **caractérisée en ce que** l'entraînement pour le bras pivotant au moins unique (50, 51) comprend au moins un moteur (61) qui entraîne une broche filetée (61) qui coopère elle-même avec un manchon fileté (63) fixé à pivotement sur un élément (43) de la tringlerie (40).

9. Installation selon l'une des revendications précédentes, **caractérisée en ce qu'**elle sert à la peinture par immersion cataphorétique.

10. Installation selon l'une des revendications précédentes, **caractérisée en ce que** les objets sont des carrosseries de véhicules.
